# EUROPÄISCHE PATENTSCHRIFT

(11) **EP 2 848 351 B1**
(45) Veröffentlichungstag und Bekanntmachung des Hinweises auf die Patenterteilung: **03.05.2017**
(21) Anmeldenummer: 13005220.2
(22) Anmeldetag: 05.11.2013
(51) Int. Cl.: B23K 9/173, B23K 9/29, B23K 9/32

(54) **Verfahren und Vorrichtung zum Metallschutzgasschweißen mit einer Zusatzgasdüse**
Method of and apparatus for welding metal using protective gas and a supplementary gas nozzle
Procédé et appareil de soudage sous gaz de protection avec une buse de gaz supplémentaire

(30) Priorität: 12.09.2013 DE 102013015171
(43) Veröffentlichungstag der Anmeldung: 18.03.2015
(73) Patentinhaber: Linde Aktiengesellschaft, 80331 München (DE)
(72) Erfinder: Dreßel, Laurentius, 85301 Schweitenkirchen (DE); Siewert, Erwan, 80802 München (DE)
(74) Vertreter: Gellner, Bernd

(56) Entgegenhaltungen:
- DE-A1- 2 265 065
- DE-U1- 8 211 393
- JP-A- S55 165 279
- JP-A- 2010 046 677

## Beschreibung

Die Erfindung betrifft ein Verfahren zum Metallschutzgasschweißen sowie eine Vorrichtung zum Metallschutzgasschweißen gemäß dem Oberbegriff der Ansprüche 1 und 8 (siehe, z. B., DE22 65 065), wobei eine Drahtelektrode durch einen Lichtbogen aufgeschmolzen wird, wobei der Lichtbogen zwischen der Drahtelektrode und einem Werkstück brennt und ein Schutzgas zugeführt wird.

### Stand der Technik

Beim Metallschutzgasschweißen (MSG-Schweißen) handelt es sich um ein Lichtbogenschweißverfahren, das beispielsweise zum Auftragsschweißen, Verschweißen oder Verlöten von ein, zwei oder mehreren Werkstücken aus metallischen Werkstoffen verwendet wird. Dabei wird in einer Schutzgasatmosphäre eine Drahtelektrode in Form eines Drahtes oder eines Bandes kontinuierlich nachgeführt und durch einen Lichtbogen aufgeschmolzen, der zwischen dem Werkstück und der Drahtelektrode brennt. Das Werkstück dient dabei als zweite Elektrode. Insbesondere dient das Werkstück dabei als Kathode und die Drahtelektrode als Anode. Durch Kathodeneffekte wird das Werkstück dabei zumindest teilweise aufgeschmolzen und bildet das Schmelzbad. An ihrem Ende wird die Drahtelektrode aufgeschmolzen und es bildet sich überwiegend durch den Lichtbogen ein schmelzflüssiger Tropfen. Durch verschiedene Kräfte löst sich der Tropfen von der Drahtelektrode ab und geht in das Schmelzbad über.

Dieser Prozess aus Aufschmelzen der Drahtelektrode, Bildung des Tropfens, Ablösen des Tropfens und Interaktion des Tropfens mit dem Werkstück wird als Werkstoffübergang bezeichnet.

Je nach verwendetem Schutzgas spricht man von Metall-Aktivgas-Schweißen (MAG-Schweißen) oder Metall-Inertgas-Schweißen (MIG-Schweißen). Anhand der Stromstärke, der Schutzgasauswahl, des Drahtelektrodendurchmessers und der Lichtbogenlänge können für die meisten Fügeaufgaben angepasste Lichtbogentypen (z.B. Kurz-, Lang-, Sprüh-, Rotations-, Impulslichtbogen) eingestellt werden. Allerdings können bei derartigen MSG-Schweiß-Verfahren Lichtbogenbetriebszustände nur in begrenzten Stromstärke- bzw. Drahtvorschubbereichen verwendet werden. Wesentliche Eigenschaften, die den Übergang in einen anderen Lichtbogenbetriebszustand bestimmen, sind der Lichtbogenansatz an der Drahtelektrode und die Oberflächenspannung der Tropfen. Die Oberflächenspannung der Tropfen sinkt mit zunehmender Temperatur der Tropfen und mit zunehmender Oxidation.

Um spezielle Schweißaufgaben wie z.B. dünne Bleche und Wurzellagen sicher schweißen zu können, müssen hierfür Lichtbogentypen, die ein relativ kaltes Schmelzbad erzeugen (auch kalte Prozesse genannt) eingesetzt werden, welche jedoch mit einer geringen Abschmelzleistung verbunden sind. Somit müssen Kompromisse hinsichtlich der Abschmelzleistung hingenommen werden. Für dicke Bauteile und Fülllagen werden hingegen Lichtbogentypen hoher und höchster Abschmelzleistung eingestellt, die wiederum mit einer großen Energieeinbringung in das Werkstück, vermehrten Prozessinstabilitäten und Bildung von Spritzern verbunden sind. Die Abschmelzleistung ist beim MSG-Schweißen sehr starr an den Energieeintrag in das Werkstück gekoppelt, da die Drahtelektrode als "Träger" des Lichtbogens und gleichzeitig als Zusatzwerkstoff fungiert, und kann daher in nur sehr begrenztem Maße variiert werden, ohne auch den Energieeintrag in das Werkstück zu verändern.

Das MSG-Schweißen ist mit einer erheblichen Bildung an Emissionen verbunden. Diese Emissionen umfassen einerseits UVB-Strahlung. Andererseits ist das MSG-Schweißen mit einer erheblichen Emission in Form von Stäuben, Dämpfen und Rauch verbunden, die über das Atmungssystem aufgenommen werden können. Das MSG-Schweißen ist daher mit einer starken Beeinflussung der Arbeitssicherheit und einem hohen Gesundheitsrisiko verbunden. Insbesondere bei Prozessunregelmäßigkeiten wie Kurzschlüssen, und Spritzern kommt es dabei verstärkt zu derartigen Emissionen.

Der Erfindung liegt daher die Aufgabe zu Grunde, beim MSG-Schweißen die Arbeitssicherheit durch die Reduzierung von Emissionen zu erhöhen und eine flexible Einflussnahme auf den Werkstoffübergang zu ermöglichen.

### Offenbarung der Erfindung

Ein Verfahren und eine Vorrichtung zum Metallschutzgasschweißen gemäß der Erfindung sind in den Ansprüche 1 und 8 definiert. Bei einem erfindungsgemäßen Verfahren wird eine Drahtelektrode durch einen Lichtbogen aufgeschmolzen, wobei der Lichtbogen zwischen der Drahtelektrode und einem Werkstück brennt und ein Schutzgas insbesondere parallel zur Vorschubrichtung der Drahtelektrode zugeführt wird. Erfindungsgemäß wird zusätzlich zu dem Schutzgas ein Zusatzgas in Form von mindestens einer auf eine Spitze der Drahtelektrode gerichteten Zusatzgasströmung zugeführt. Vorteilhafte Ausgestaltungen ergeben sich aus den Unteransprüchen und der nachfolgenden Beschreibung.

Unter "Werkstück" seien ein oder mehrere, insbesondere metallische Elemente verstanden, die durch Metallschutzgasschweißen bearbeitet werden.

Unter der "Spitze" der Drahtelektrode ist dabei die jeweilige Stelle der Drahtelektrode zu verstehen, welche durch den Lichtbogen aufgeschmolzen wird.

Es sei darauf hingewiesen, dass, wenn in der folgenden Beschreibung von einem oder dem Zusatzgas, von einer oder der Zusatzgasströmung bzw. von einer oder der Zusatzgasdüse die Rede ist, die Ausführung nicht auf ein einziges Zusatzgas bzw. auf eine einzige Zusatzgasströmung bzw. auf eine einzige Zusatzgasdüse beschränkt sein soll. Vielmehr sollen besagte Formulierungen jeweils als mindestens ein Zusatzgas, mindestens ein Zusatzgasströmung bzw. mindestens eine Zusatzgasdüse verstanden werden.

### Vorteile der Erfindung

Kern der Erfindung ist das gezielte und örtlich begrenzte Einwirken des Zusatzgases auf die Spitze der Drahtelektrode. Durch das erfindungsgemäße Zuführen des Zusatzgases wird der Werkstoffübergang gezielt beeinflusst. Durch das erfindungsgemäße Zuführen des Zusatzgases werden physikalische Eigenschaften eines Tropfens der aufgeschmolzenen Drahtelektrode und des angrenzenden Plasmas gezielt beeinflusst. Dabei werden gezielt die Bildung des Tropfens an der Drahtelektrode sowie das Ablösen des Tropfens gezielt beeinflusst. Insbesondere werden eine Oberflächenspannung und eine Viskosität des Tropfens verändert. Durch Erhöhung oder Erniedrigung der Oberflächenspannung des Tropfens kann das Volumen des Tropfens und somit die Größe des Tropfens gezielt beeinflusst werden. Durch diese Einflussnahme auf die Größe des Tropfens kann beispielsweise eine Spaltüberbrückbarkeit beeinflusst werden.

Des Weiteren werden durch die erfindungsgemäße Zufuhr des Zusatzgases Kräfte beeinflusst, die auf den Tropfen der Drahtelektrode wirken. Insbesondere werden Pinch-Kräfte beeinflusst, insbesondere mittels eines Lichtbogenansatzes an der Drahtelektrode. Pinch-Kräfte wirken bei einem konzentrierten Lichtbogenansatz axial auf die Drahtelektrode und wirken dem Ablösen des Tropfens entgegen. Ein den Tropfen umschließender Lichtbogenansatz führt zu Pinch-Kräften, welche radial nach innen gerichtet sind und die Tropfenbildung und das Ablösen der Tropfen unterstützen. Zudem wird durch einen Impuls der Zusatzgasströmung ein Druck auf den Tropfen ausgeübt, was zu einer Deformation des Tropfens führt. Auch Effekte, welche dem Ablösen der Tropfen entgegenwirken, insbesondere die Oberflächenspannung und Viskosität, können gezielt durch das Zusatzgas beeinflusst werden, insbesondere durch eine Kühlung der aufgeschmolzenen Drahtelektrode, durch Oxidation bzw. Vermeidung der Oxidation.

Durch die Einflussnahme auf den Tropfen und auf den Werkstoffübergang kann das Auftreten von Kurzschlüssen reduziert werden. Insbesondere durch die gezielte Beeinflussung der Größe des Tropfens und der Ablösung des Tropfens von der Drahtelektrode kann vermieden werden, dass der Tropfen eine derartige Größe erreicht, dass der Tropfen das Werkstück berührt, eine Kurzschlussbrücke entsteht und es zu einem Kurzschluss kommt. In derartigen Fällen kommt es zu einer explosionsartigen Auflösung der Kurzschlussbrücke, was mit erheblichen Emissionen verbunden ist. Durch die Erfindung werden Tropfen gezielt und frühzeitig vom Drahtende abgelöst, damit kein derartiger Kurzschluss auftritt. Somit werden Emissionen beim Metallschutzgasschweißen erheblich reduziert. Dadurch wird eine gesundheitliche Belastung eines Anwenders vermindert und die Arbeitssicherheit erhöht.

Durch das erfindungsgemäße Verfahren werden herkömmliche MSG-Schweiß-Verfahren erheblich verbessert. In herkömmlichen MSG-Schweiß-Verfahren können Lichtbogenbetriebszustände nur in begrenzten Stromstärke- bzw. Drahtvorschubbereichen verwendet werden. Durch die Erfindung wird es ermöglicht, die Drahtfördergeschwindigkeit, mit welcher die Drahtelektrode nachgeführt wird, und dadurch die Abschmelzleistung und letztendlich den Einsatzbereich einzelner Lichtbogentypen extrem auszuweiten.

Der Energieeintrag in das Werkstück sowie Emissionen werden reduziert und die Abschmelzleistung wird erhöht. Viele Schweißaufgaben können durch eine Steigerung der Abschmelzleistung und Reduzierung des Energieeintrags in das Werkstück wirtschaftlicher umgesetzt werden. Durch die gezielte Beeinflussung des Tropfens können Spritzer, Satellitentropfen sowie eine Überhitzung des Tropfens vermieden werden. Dadurch werden ebenfalls aufwendige Nacharbeiten vermieden. Prozessinstabilitäten werden vermieden und die Prozesssicherheit wird extrem verbessert. Die Arbeitssicherheit wird erhöht und Gesundheitsrisiken werden reduziert. Insbesondere bei Verfahren hoher Abschmelzleistung kann die Prozesssicherheit erhöht und Spritzerbildung reduziert werden.

Bevorzugt wird das Zusatzgas in Form der mindestens einen auf die Spitze der Drahtelektrode gerichteten Zusatzgasströmung gezielt auf eine oder mehrere bestimmte Positionen der Spitze der Drahtelektrode geführt. Diese bestimmte Position kann ein Ende der nicht aufgeschmolzenen Drahtelektrode sein. Darunter ist das Ende der Drahtelektrode zu verstehen, bevor die Drahtelektrode aufgeschmolzen wird und in den Tropfen übergeht. Alternativ oder zusätzlich kann die bestimmte Position der Übergang von diesem Ende der Drahtelektrode zu dem Tropfen sein. Dieser Übergang wird als eingeschnürter Bereich bezeichnet. Alternativ oder zusätzlich kann die bestimmte Position der Tropfen selbst sein. Insbesondere durch Zuführen des Zusatzgases auf den eingeschnürten Bereich, also den Übergang von dem Ende der Drahtelektrode zu dem Tropfen, kann gezielt die Oberflächenspannung des Tropfens variiert werden. Das Ablösen des Tropfens kann somit gezielt verzögert oder beschleunigt werden.

Gemäß der Erfindung wird durch Zuführen des Zusatzgases in Form der mindestens einen, auf die Spitze der Drahtelektrode gerichteten Zusatzgasströmung ein Lichtbogenansatz an der Drahtelektrode verändert. Der Lichtbogenansatz ist dabei als die Fläche der Drahtelektrode zu verstehen, an welcher der Lichtbogen an der Drahtelektrode ansetzt. Der Lichtbogenansatz wird dabei insbesondere in Richtung des Werkstücks oder von dem Werkstück weg verschoben. Der Lichtbogenansatz an der Drahtelektrode wird gemäß der Erfindung gezielt variiert durch eine Veränderung der Zusammensetzung des Zusatzgases. Bestimmte physikalische Eigenschaften einzelner Gase als Zusatzgas werden gemäß der Erfindung gezielt ausgenutzt, um den Lichtbogenansatz und insbesondere die Energiedichte des Lichtbogenansatzes zu beeinflussen. Insbesondere werden dabei die Enthalpie und die Wärmeleitfähigkeit einzelner Gase ausgenutzt. Bei Verwendung von Argon mit seiner geringen Enthalpie und Wärmeleitfähigkeit kann etwa der Lichtbogenansatz breiter ausgebildet werden. Auch die Temperatur des Zusatzgases und damit verbundene Kühleffekte werden gezielt ausgenutzt, um den Lichtbogenansatz und die Energiedichte des Lichtbogenansatzes zu beeinflussen.

Insbesondere durch ein vergleichsweise kaltes Zusatzgas kann der Lichtbogenansatz in Richtung des Werkstücks verschoben werden. Durch diese Verschiebung wird insbesondere die Energiedichte des Lichtbogenansatzes erhöht. Beispielsweise durch Nutzung eines leicht zu ionisierenden Gases als Zusatzgas kann der Lichtbogenansatz vom Werkstück weg verschoben werden. Durch diese Verschiebung wird insbesondere die Energiedichte reduziert und die Energie wird über eine größere Fläche an der Spitze der Drahtelektrode, insbesondere am Ende der Drahtelektrode, eingebracht.

Durch die Beeinflussung der Energiedichte können zudem Rückstoßkräfte am Ende der Drahtelektrode, welche durch den Verdampfungsvorgang erzeugt werden, beeinflusst werden. Diese Rückstoßkräfte agieren gegen die Tropfenablösung und können zum Auslenken der Tropfen aus der Lichtbogenachse und somit zu Kurzschlüssen und Spritzen führen.

Durch die Beeinflussung des Lichtbogenansatzes können insbesondere die Temperaturverteilung des Tropfens beeinflusst und eine Überhitzung des Tropfens vermieden werden. Somit kann beispielsweise die Temperatur des Tropfens reduziert sowie eine für eine bestimmte Abschmelzleistung notwendige Lichtbogenleistung reduziert werden, so dass ein Energieeintrag in das Werkstück reduziert wird.

Gemäß der Erfindung wird das Zusatzgas in Form von mindestens einer auf die Spitze der Drahtelektrode gerichteten zeitlich veränderlichen Zusatzgasströmung zugeführt. Ein Zusatzgas in Form einer zeitlich veränderlichen Zusatzgasströmung umfasst insbesondere eine stufenweise, kontinuierliche und/oder durch eine mathematische Funktion beschreibbare Zunahme, Abnahme und/oder Modulation, insbesondere auch eine periodische Veränderung. Insbesondere kann eine Frequenz, eine Phase, eine Amplitude eine Impulsform und/oder eine Grundlinie bzw. ein Grunddurchfluss einer periodisch veränderten Zusatzgasströmung verändert werden. Die Zusatzgasströmung kann dabei insbesondere auf einen Verlauf einer Schweißspannung und/oder eines Schweißstroms abgestimmt werden.

Gemäß der Erfindung wird eine Zusammensetzung des Zusatzgases in Form der zeitlich veränderlichen Zusatzgasströmung zeitlich variiert. Insbesondere wird ein Pulsen der Zusatzgasmenge erreicht und hochdynamische Gaspulse erzeugt. Das Zusatzgas kann dabei bis in den Kiloherzbereich dynamisch, zeitlich veränderlich zugeführt werden. Der Pulsablauf kann kontinuierlich in bestimmten Strom- und Spannungsphasen erfolgen oder auch prozessabhängig anhand von z.B. elektrischen Signalen. Durch die Veränderung der Zusammensetzung des Zusatzgases können gezielt Eigenschaften verschiedener Gase wie die Wärmeleitfähigkeit, die Enthalpie, die Ionisierungsenergie oder Dichte sowie chemische Reaktionen wie die Oxidation der Tropfenoberfläche und der Drahtelektrodenoberfläche bzw. auch das Vermeiden der Oxidation ausgenutzt werden. Vorzugsweise wird auch eine Menge des Zusatzgases in Form der zeitlich veränderlichen Zusatzgasströmung zeitlich variiert. Über die Menge, insbesondere über eine Durchflussmenge des Zusatzgases, kann die Kraftwirkung bzw. der Impuls des Zusatzgases, die Intensität der Eigenschaften der Gase sowie die Kühlwirkung des Zusatzgases beeinflusst werden. Vorzugsweise werden dabei Argon, Helium, Wasserstoff, Sauerstoff, Stickstoff, Kohlendioxid im Einzelnen oder deren Mischungen als Zusatzgas zugeführt. Bevorzugt werden eine Zusammensetzung und/oder eine Menge des Schutzgases zeitlich konstant gehalten.

In einer vorteilhaften Ausgestaltung der Erfindung wird das erfindungsgemäße Verfahren für ein Metallschutzgaspulsschweißen mit gepulstem Gleichstrom genutzt. Bei einem MSG-Puls-Schweißen mit gepulstem Gleichstrom wird kontrolliert ein Tropfen pro Strompuls abgelöst. Dadurch werden Kurzschlüsse und Spritzer vermieden. Durch das erfindungsgemäße Verfahren kann ein MSG-Puls-Schweißen sowohl in Bereichen mit geringer, mit mittlerer und mit hoher, als auch höchster Abschmelzleistung effektiv und sicher, ohne Auftreten von Kurzschlüssen und Spritzern betrieben werden. Somit werden die Prozesssicherheit und die Arbeitssicherheit weiter erhöht, Gesundheitsrisiken und Nacharbeiten vermieden. Durch die Ausweitung des Arbeitsbereiches sind eine umfangreiche Werkstofffamilie zu fügen und der zu fügende Blechdickenbereich auszuweiten.

In einer vorteilhaften Ausgestaltung wird dem MSG-Puls-Schweißen ein kohlendioxidhaltiges Gas als Schutzgas zugeführt. Insbesondere beträgt ein Kohlendioxidgehalt des Schutzgases dabei mindestens 20%. Durch das Kohlendioxid in dem Schutzgas kann ein Einbrand verbessert werden und die Prozesssicherheit erhöht werden. In bisherigen herkömmlichen Anwendungen des MSG-Puls-Schweißens gemäß dem Stand der Technik war die Nutzung von Kohlendioxid im Schutzgas nur schwer realisierbar und kaum bzw. gar nicht möglich. Durch das Kohlendioxid im Schutzgas wird ein konzentrierter Lichtbogenansatz erzeugt und die Oberflächenspannung wird reduziert. Pinch-Kräfte wirken durch diesen konzentrierten Lichtbogenansatz axial auf die Drahtelektrode und wirken dem Ablösen des Tropfens entgegen. Der Tropfen wächst dabei so lange an, bis er das Schmelzbad berührt und ein Kurzschluss entsteht. Der Tropfen löst sich dabei explosionsartig von der Drahtelektrode ab, was zu einer extremen Spritzerbildung führt und die Prozesssicherheit erheblich reduziert. Durch die erfindungsgemäße Zufuhr des Zusatzgases, insbesondere mit inerten oder reduzierenden Gasen als Zusatzgas, können der Lichtbogenansatz und die Oberflächenspannung jedoch beeinflusst werden, damit kein konzentrierter Lichtbogenansatz und keine Reduzierung der Oberflächenspannung auftreten. Durch die Erfindung kann nun das MSG-Puls-Schweißen mit kohlendioxidhaltigem Gas als Schutzgas betrieben werden und die Vorteile von kohlendioxidhaltigem Gas als Schutzgas können auch beim MSG-Puls-Schweißen genutzt werden.

Ausgestaltungen dieser erfindungsgemäßen Vorrichtung ergeben sich aus der obigen Beschreibung des erfindungsgemäßen Verfahrens in analoger Art und Weise.

Eine erfindungsgemäße Vorrichtung zum Metallschutzgasschweißen, weist dabei mindestens eine Zusatzgasdüse auf, die dazu eingerichtet ist, ein Zusatzgas in mindestens einer auf eine Spitze der Drahtelektrode gerichteten Zusatzgasströmung zuzuführen. Die Zusatzgasdüse kann dabei mehrere Zuführungen und Düsenöffnungen besitzen, so dass unterschiedliche Positionen der Spitze der Drahtelektrode mit unterschiedlichen Gasen und Gasmengen gleichzeitig oder zu unterschiedlichen Zeitpunkten beaufschlagt werden können. Wie bereits erläutert können diese Positionen der Spitze der Drahtelektrode insbesondere das Ende der nicht aufgeschmolzenen Drahtelektrode, der Übergang von diesem Ende der Drahtelektrode zu dem Tropfen und/oder der Tropfen sein. Für automatisierte Prozesse ist eine Nachführung der Zusatzgasdüse entsprechend dem Stick-Out des Prozess, also dem Abstand vom Werkstück zur Zusatzgasdüse, denkbar, damit immer dieselbe Position bzw. dieselben Positionen der Drahtelektrode angeströmt werden.

Vorteilhafterweise ist die mindestens eine Zusatzgasdüse als ein Düsen-Ring am Ende der Schutzgasdüse ausgebildet. Eine herkömmliche Vorrichtung zum MSG-Schweißen kann demgemäß weiterhin genutzt werden und mit geringem baulichem und monetärem Aufwand zu einer erfindungsgemäßen Vorrichtung aufgerüstet werden. Der Düsen-Ring kann dabei insbesondere am Ende der Schutzgasdüse angeschraubt werden. Somit kann auch eine Wartung und ein Ersatz der Zusatzgasdüse erleichtert werden. Über diesen Düsen-Ring kann insbesondere eine zeitlich veränderliche Zusatzgasströmung bis in den Kiloherzbereich hochdynamisch zugeführt werden. Um dabei hochdynamische Gaspulse bis in den Kilohertzbereich erzeugen zu können, werden zweckmäßige Ventile genutzt, beispielsweise Piezo-Ventile und/oder Magnetventile. Um die Gaspulse mit dem Schweißverlauf zu synchronisieren, kann beispielsweise eine Trigger-Schaltung mit eingebautem Verzögerungsglied eingesetzt werden. Die hohe Dynamik des Zusatzgasstroms lässt sich beispielsweise durch eine CMOSens-Technologie für Massendurchflussmesser oder Differenzdruckmessungen abbilden.

Bevorzugt weist die mindestens eine Zusatzgasdüse radial nach innen gerichtete Bohrungen und/oder einen radial nach innen gerichteten Schlitz auf. Somit kann das Zusatzgas gezielt und örtlich begrenzt gesteuert werden und präzise auf die Spitze der Drahtelektrode bzw. auf die bestimmten Positionen der Spitze der Drahtelektrode zugeführt werden.
In einer vorteilhaften Ausgestaltung der erfindungsgemäßen Vorrichtung ist die mindestens eine Zusatzgasdüse höhenverstellbar ausgebildet. Insbesondere kann dabei genau eine Zusatzgasdüse vorhanden sein, die höhenverstellbar ausgebildet ist. Die Höhe dieser einen Zusatzdüse wird dabei auf die bestimmten Position der Drahtelektrode eingestellt, der das Zusatzgas zugeführt werden soll. Somit können durch eine einzige Zusatzdüse dennoch unterschiedlichen Positionen der Drahtelektrode das Zusatzgas zugeführt werden. In einer alternativen vorteilhaften Ausgestaltung sind mehrere Zusatzgasdüsen in unterschiedlichen, insbesondere fest vorgegebenen Höhen angebracht. Somit können den unterschiedlichen Positionen der Drahtelektrode unterschiedliche Gase und Gasmengen gleichzeitig oder zu unterschiedlichen Zeitpunkten zugeführt werden.

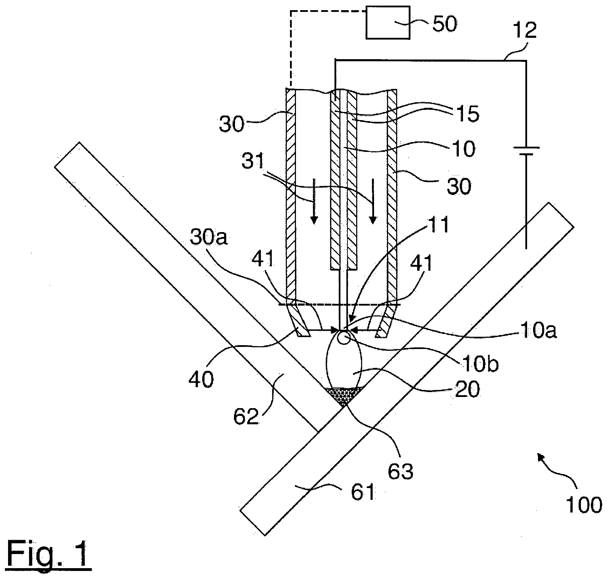

Die Erfindung und ihre Vorteile werden nun anhand der beigefügten Zeichnung weiter erläutert. In dieser zeigt
- Figur 1: schematisch eine Ausgestaltung einer erfindungsgemäßen Vorrichtung zum Metallschutzgasschweißen, die dazu eingerichtet ist, eine Ausführungsform eines erfindungsgemäßen Verfahrens durchzuführen.

In Figur 1 ist dabei ein Metallschutzgasschweißgerät (MSG-Schweißgeräts) als eine Vorrichtung zum Metallschutzgasschweißen (MSG-Schweißen) schematisch dargestellt und mit 100 bezeichnet. Mittels des MSG-Schweißgeräts 100 wird durch den Fügevorgang ein erstes Werkstück 61 mit einem zweiten Werkstück 62 verschweißt.

Das MSG-Schweißgerät 100 weist eine Drahtelektrode 10 in Form eines Drahts auf, der von einer Stromkontakthülse 15 umschlossen ist. Zwischen dem ersten Werkstück 61 und der Stromkontaktdüse 15 ist eine elektrische Spannung angelegt, angedeutet durch das Bezugszeichen 12. Ein Lichtbogen 20 wird durch Kontaktzündung initiiert und brennt zwischen der Drahtelektrode 10 und dem ersten Werkstück 61. Durch die hohen Temperaturen wird die Drahtelektrode 10 an ihrer Spitze 11 aufgeschmolzen. Somit bildet sich ein Tropfen 10b aufgeschmolzenen Drahts. Letztendlich löst sich der Tropfen 11 von der Drahtelektrode 10, geht in das Schmelzbad 63 über und bildet die Schweißnaht (Fügeverbindung zwischen den Werkstücken 61 und 62). Der Draht 10 wird dabei kontinuierlich nachgeführt. Die Bildung des Tropfens 10b sowie das Ablösen des Tropfens 10b von der Drahtelektrode 10 und der Übergang in das Schmelzbad 63 wird als Werkstoffübergang bezeichnet.

Das MSG-Schweißgerät 100 weist weiterhin eine Schutzgasdüse 30 auf, um Schutzgas in Menge und Zusammensetzung konstant zuzuführen, angedeutet durch Bezugszeichen 31. An einem Ende 30a der Schutzgasdüse 30 ist eine schematisch dargestellte erfindungsgemäße Zusatzgasdüse 40 angebracht. Die Zusatzgasdüse 40 ist dabei insbesondere als ein an der Schutzgasdüse 30 anschraubbarer Aufsatz ausgebildet. Die Zusatzgasdüse 40 weist radial nach innen gerichtete Bohrungen und Schlitze auf. Über die Zusatzgasdüse 40 wird ein Zusatzgas in Form von mindestens einer Zusatzgasströmung zugeführt, angedeutet durch das Bezugszeichen 41. Die Zusatzgasströmung 41 ist dabei auf die Spitze 11 der Drahtelektrode 10 gerichtet.

Durch die Bohrungen und Schlitze der Zusatzgasdüse 40 wird die Zusatzgasströmung 41 gezielt und örtlich begrenzt auf eine oder mehrere bestimmte Positionen der Spitze der Drahtelektrode 10 gerichtet. Insbesondere wird die Zusatzgasströmung 41 dabei auf ein Ende 10a der nicht aufgeschmolzenen Drahtelektrode 10 gerichtet. Das Ende 10a der nicht aufgeschmolzenen Drahtelektrode 10 ist dabei das Ende der Drahtelektrode 10, bevor diese aufgeschmolzen wird und in den Tropfen 10b übergeht. Alternativ oder zusätzlich wird die Zusatzgasströmung 41 auf den Übergang von diesem Ende 10a der nicht aufgeschmolzenen Drahtelektrode 10 zum Tropfen 10b gerichtet. Alternativ oder zusätzlich wird die Zusatzgasströmung 41 auf den Tropfen 10b gerichtet.

Durch das Zusatzgas können die Bildung und das Ablösen des Tropfens 10b und somit der Werkstoffübergang gezielt beeinflusst werden. Je nach Zusammensetzungen und Mengen des Zusatzgases werden die Bildung, das Ablösen des Tropfens 10b, die Tropfengröße, die Oberflächenspannung, die Viskosität und/oder die Temperatur des Tropfens 10b gezielt beeinflusst. Über die Tropfentemperatur werden die Verdampfung und somit auch der Lichtbogenansatz beeinflusst.

Die Zusammensetzungen (gemäß der Erfindung, siehe Anspruch 8) und die Mengen des Zusatzgases werden durch eine Steuereinheit 50 gesteuert. Die Steuereinheit 50 ist dazu eingerichtet, eine Ausführungsform eines erfindungsgemäßen Verfahrens durchzuführen. Insbesondere steuert die Steuereinheit 50 mittels elektrischer Signale ein Pulsen der Menge des Zusatzgases bzw. der Zusatzgasströmung 41. Durch die Veränderung der Zusammensetzung des Zusatzgases werden gezielt Eigenschaften wie insbesondere Wärmeleitfähigkeit, Ionisierungsenergie und/oder Dichte, sowie Oxidation der Oberfläche des Tropfens 11 beeinflusst. Durch die Veränderung der Menge des Zusatzgases werden gezielt die Intensität dieser Eigenschaften sowie eine Kühlwirkung und eine Kraftwirkung des Zusatzgases beeinflusst.

### Bezugszeichenliste

- 100: Metallschutzgasschweißgerät

- 10: Drahtelektrode
- 10a: Ende der nicht abgeschmolzenen Drahtelektrode
- 10b: Tropfen
- 11: Spitze der Drahtelektrode
- 12: elektrische Spannung
- 15: Stromkontakthülse

- 20: Lichtbogen

- 30: Schutzgasdüse
- 30a: Ende der Schutzgasdüse
- 31: Schutzgas

- 40: Zusatzgasdüse
- 41: Zusatzgas in Form einer Zusatzgasströmung

- 50: Steuereinheit

- 61: erstes Werkstück
- 62: zweites Werkstück
- 63: Schmelzbad

## Patentansprüche

1. Verfahren zum Metallschutzgasschweißen, bei dem eine Drahtelektrode (10) durch einen Lichtbogen (20) aufgeschmolzen wird, wobei der Lichtbogen (20) zwischen der Drahtelektrode (10) und einem Werkstück (61) brennt und ein Schutzgas (31) zugeführt wird, wobei
zusätzlich zu dem Schutzgas (31) ein Zusatzgas in Form von mindestens einer auf eine Spitze (11) der Drahtelektrode (10) gerichteten Zusatzgasströmung (41) zugeführt wird, wobei durch das Zuführen des Zusatzgases in Form von mindestens einen auf die Spitze (11) der Drahtelektrode (10) gerichteten Zusatzgasströmung (41) ein Lichtbogenansatz an der Drahtelektrode (10) verschoben wird, und wobei das Zusatzgas in Form von mindestens einer zeitlich veränderlichen Zusatzgasströmung (41) zugeführt wird, **dadurch gekennzeichnet, dass** eine Zusammensetzung des Zusatzgases in Form der zeitlich veränderlichen Zusatzgasströmung (41) zeitlich variiert wird.

2. Verfahren nach Anspruch 1, wobei das Zusatzgas in Form der mindestens einen auf die Spitze (11) der Drahtelektrode (10) gerichteten Zusatzgasströmung (41) auf ein Ende (10a) der nicht aufgeschmolzenen Drahtelektrode (10), auf einen Übergang von dem Ende (10a) der nicht aufgeschmolzenen Drahtelektrode (10) zu einem Tropfen (10b) der Drahtelektrode (10) und/oder auf den Tropfen (11) der Drahtelektrode (10) zugeführt wird.

3. Verfahren nach Anspruch 1 oder 2 wobei eine Menge des Zusatzgases in Form der zeitlich veränderlichen Zusatzgasströmung (41) zeitlich variiert werden.

4. Verfahren nach einem der vorstehenden Ansprüche, wobei Argon, Helium, Wasserstoff, Sauerstoff, Stickstoff, Kohlendioxid im Einzelnen oder deren Mischungen als Zusatzgas zugeführt werden.

5. Verfahren nach einem der vorstehenden Ansprüche, wobei eine Zusammensetzung und/oder eine Menge des zugeführten Schutzgases (31) konstant gehalten werden.

6. Verfahren nach einem der vorstehenden Ansprüche, wobei das Metallschutzgasschweißen als Metallschutzgaspulsschweißen mit gepulstem Gleichstrom betrieben wird.

7. Verfahren nach Anspruch 6, wobei das Metallschutzgaspulsschweißen mit gepulstem Gleichstrom mit einem kohlendioxidhaltigem Gas als Schutzgas betrieben wird, insbesondere mit einem Kohlendioxidgehalt von mindestens 20%.

8. Vorrichtung zum Metallschutzgasschweißen (100), aufweisend eine Drahtelektrode (10), ein Werkstück (61), eine Schutzgasdüse (30), die dazu eingerichtet ist, ein Schutzgas (31) zuzuführen,
wobei mindestens eine Zusatzgasdüse (40) vorhanden und dazu eingerichtet ist, ein Zusatzgas in Form von mindestens einer auf eine Spitze (11) der Drahtelektrode (10) gerichteten Zusatzgasströmung (41) zuzuführen, **dadurch gekennzeichnet, dass** eine Steuereinheit (50) vorgesehen ist, durch welche eine Zusammensetzung des Zusatzgases in Form der zeitlich veränderlichen Zusatzgasströmung (41) zeitlich variiert werden.

9. Vorrichtung nach Anspruch 8, wobei die mindestens eine Zusatzgasdüse (40) als ein Düsen-Ring am Ende (30a) der Schutzgasdüse (30) ausgebildet ist.

10. Vorrichtung nach Anspruch 8 oder 9, wobei die mindestens eine Zusatzgasdüse (40) radial nach innen gerichtete Bohrungen und/oder einen radial nach innen gerichteten Schlitz aufweist.

11. Vorrichtung nach einem der Ansprüche 8 bis 10, wobei die mindestens eine Zusatzgasdüse (40) höhenverstellbar ausgebildet ist.

12. Vorrichtung nach einem der Ansprüche 8 bis 11, aufweisend mindestens zwei Zusatzgasdüsen (40), die in unterschiedlichen Höhen angebracht sind.

## Claims

1. Method for welding metal using protective gas, in which a wire electrode (10) is melted by an arc (20), the arc (20) burning between the wire electrode (10) and a workpiece (61) and a protective gas (31) being supplied,
in addition to the protective gas (31), an additional gas in the form of at least one additional gas stream (41) aimed at the tip (11) of the wire electrode (10) being supplied,
as a result of the supply of the additional gas in the form of the least one additional gas stream (41) aimed at the tip (11) of the wire electrode (10), an arc base on the wire electrode (10) being shifted, and
the additional gas being supplied in the form of at least one time-variable additional gas stream (41),
**characterized in that**
a composition of the additional gas in the form of the time-variable additional gas stream (41) is varied over time.

2. Method according to Claim 1, wherein the additional gas in the form of the at least one additional gas stream (41) aimed at the tip (11) of the wire electrode (10) is supplied to an end (10a) of the unmelted wire electrode (10), to a transition from the end (10a) of the unmelted wire electrode (10) to a drop (10b) of the wire electrode (10) and/or to the drop (11) of the wire electrode (10).

3. Method according to Claim 1 or 2, wherein a volume of the additional gas in the form of the time-variable additional gas stream (41) is varied over time.

4. Method according to one of the preceding claims, wherein argon, helium, hydrogen, oxygen, nitrogen, carbon dioxide, individually or mixtures thereof, are supplied as additional gas.

5. Method according to one of the preceding claims, wherein a composition and/or a volume of the protective gas (31) supplied is kept constant.

6. Method according to one of the preceding claims, wherein the welding of metal using protective gas is operated as pulsed protective gas welding of metal with pulsed direct current.

7. Method according to Claim 6, wherein the pulsed protective gas welding of metal is operated with pulsed direct current using a carbon dioxide-containing gas as protective gas, in particular with a carbon dioxide content of at least 20%.

8. Apparatus for welding metal using protective gas (100), having a wire electrode (10), a workpiece (61), a protective gas nozzle (30), which is set up to supply a protective gas (31),
at least one additional gas nozzle (40) being present and being set up to supply an additional gas in the form of at least one additional gas stream (41) aimed at a tip (11) of the wire electrode (10),
**characterized in that**
a control unit (50) is provided, by means of which a composition of the additional gas in the form of the time-variable additional gas stream (41) is varied over time.

9. Apparatus according to Claim 8, wherein the at least one additional gas nozzle (40) is formed as a nozzle ring at the end (30a) of the protective gas nozzle (30).

10. Apparatus according to Claim 8 or 9, wherein the at least one additional gas nozzle (40) has radially inwardly directed bores and/or a radially inwardly directed slit.

11. Apparatus according to one of Claims 8 to 10, wherein the at least one additional gas nozzle (40) is designed to be vertically adjustable.

12. Apparatus according to one of Claims 8 to 11, having at least two additional gas nozzles (40), which are fitted at different heights.

## Revendications

1. Procédé destiné au soudage de métaux sous gaz de protection, selon lequel une électrode en forme de fil (10) est amenée à fondre par l'intermédiaire d'un arc électrique (20), dans lequel l'arc électrique (20) brûle entre l'électrode en forme de fil (10) et une pièce à usiner (61) et un gaz de protection (31) est alimenté,
dans lequel est alimenté, en plus du gaz de protection (31), un gaz additionnel se présentant sous la forme d'au moins un flux de gaz additionnel (41) dirigé sur une pointe (11) de l'électrode en forme de fil (10), dans lequel la formation d'un arc électrique est retardée au niveau de l'électrode en forme de fil (10) par l'acheminement du gaz additionnel se présentant sous la forme d'au moins un flux de gaz additionnel (41) dirigé sur la pointe (11) de l'électrode en forme de fil (10), et dans lequel est acheminé le gaz additionnel se présentant sous la forme d'au moins un flux de gaz additionnel (41) variable dans le temps, **caractérisé en ce que**
une composition du gaz additionnel se présentant sous la forme du flux de gaz additionnel (41) variable dans le temps est amenée à varier dans le temps.

2. Procédé selon la revendication 1, dans lequel le gaz additionnel, lequel se présente sous la forme d'au moins un flux de gaz additionnel (41) dirigé sur la pointe (11) de l'électrode en forme de fil (10), est acheminé vers une extrémité (10a) de l'électrode en forme de fil (10) qui n'a pas fondu, vers un passage depuis l'extrémité (10a) de l'électrode en forme de fil (10) qui n'a pas fondu jusqu'à une gouttelette (10b) de l'électrode en forme de fil (10) et/ou vers la gouttelette (11) de l'électrode en forme de fil (10).

3. Procédé selon la revendication 1 ou 2 dans lequel une quantité du gaz additionnel se présentant sous la forme du flux de gaz additionnel variable dans le temps (41) est amenée à varier dans le temps.

4. Procédé selon l'une des revendications précédentes, dans lequel de l'argon, de l'hélium, de l'hydrogène, de l'oxygène, de l'azote et/ou du dioxyde de carbone sont alimentés en tant que gaz additionnel, que ce soit individuellement ou qu'il s'agisse de leurs mélanges.

5. Procédé selon l'une des revendications précédentes, dans lequel une composition et/ou une quantité du gaz de protection (31) acheminée sont maintenues à un niveau constant.

6. Procédé selon l'une des revendications précédentes, dans lequel le soudage de métaux sous gaz de protection est réalisé au moyen d'un courant continu par impulsions en tant que soudage par impulsions sous gaz de protection.

7. Procédé selon la revendication 6, dans lequel le soudage par impulsions sous gaz de protection est réalisé au moyen d'un courant continu par impulsions avec un gaz contenant du dioxyde de carbone, lequel sert de gaz de protection et dont la teneur en dioxyde de carbone, en particulier, est d'au moins 20 %.

8. Dispositif destiné au soudage de métaux sous gaz de protection (100), présentant une électrode en forme de fil (10), une pièce à usiner (61), une buse (30) destinée au gaz de protection, laquelle est conçue en vue d'acheminer un gaz de protection (31),
dans lequel est présente au moins une buse (40) destinée au gaz additionnel et laquelle est conçue en vue d'acheminer un gaz additionnel se présentant sous la forme d'au moins un flux de gaz additionnel (41) dirigé sur une pointe (11) de l'électrode en forme de fil (10),
**caractérisé en ce que**
une unité de commande (50) est prévue, par l'intermédiaire de laquelle une composition du gaz additionnel se présentant sous la forme du flux de gaz additionnel (41) variable dans le temps est amenée à varier dans le temps.

9. Dispositif selon la revendication 8, dans lequel l'au moins une buse (40) destinée au gaz additionnel est conçue sous la forme d'une bague de buse située au niveau de l'extrémité (30a) de la buse (30) destinée au gaz de protection.

10. Dispositif selon la revendication 8 ou 9, dans lequel l'au moins une buse (40) destinée au gaz additionnel présente des alésages dirigés de manière radiale vers l'intérieur et/ou une fente dirigée de manière radiale vers l'intérieur.

11. Dispositif selon l'une des revendications 8 à 10, dans lequel l'au moins une buse (40) destinée au gaz additionnel est conçue de manière à ce que sa hauteur puisse être ajustée.

12. Dispositif selon l'une des revendications 8 à 11, présentant au moins deux buses (40) destinées au gaz additionnel, lesquelles sont installées à des hauteurs différentes.
